# EUROPÄISCHE PATENTSCHRIFT

(11) **EP 2 815 923 B1**
(45) Veröffentlichungstag und Bekanntmachung des Hinweises auf die Patenterteilung: **18.04.2018**
(21) Anmeldenummer: 14466016.4
(22) Anmeldetag: 17.06.2014
(51) Int. Cl.: B60R 5/04, B60R 7/02

(54) **Verschiebbares Ablagefach im Kofferraum**
Sliding compartment in a luggage compartment
Compartiment coulissant dans un coffre de vehicule automobile

(30) Priorität: 18.06.2013 CZ 20130469
(43) Veröffentlichungstag der Anmeldung: 24.12.2014
(73) Patentinhaber: Skoda Auto A.S., 293 60 Mladá Boleslav (CZ)
(72) Erfinder: Hreben, Martin, CZ-16100 Praha 6 (CZ); Locker, Lukás, CZ-51703 Skuhrov nad Belou (CZ); Spacek, Vladislav, CZ-54401 Dvur Králové nad Labem (CZ)

(56) Entgegenhaltungen:
- DE-A1-102007 036 926
- FR-A1- 2 945 493
- US-A1- 2011 025 086

## Beschreibung

### Technisches Gebiet

Die Erfindung betrifft ein verschiebbares Ablagefach im Fahrzeugkofferraum, insbesondere ein unter der Hutablage des Kofferraumes angeordnetes verschiebbares Ablagefach, das einen Arretier-, Sperr- und Führungsmechanismus aufweist, der seine problemlose Verschiebung sowie seine Arretierung während der Fahrt des Kraftfahrzeuges sicherstellt.

### Bisheriger Stand der Technik

Das Kofferraum des Kraftfahrzeuges dient zur Beförderung insbesondere von größeren Gepäckstücken, wie z.B. Koffer, Sporttaschen, Kinderwagen usw. Zum Verstauen von kleineren Gegenständen im Kofferraum dienen dann verschiedene Kästen oder Fächer, die in den seitlichen Verkleidungen, unter der Ladekante usw. angeordnet sind. Weitere Möglichkeit zum Verstauen dieser Gegenstände stellt die Nutzung des Raumes unter der Hutablage dar, die einerseits eine ästhetische Funktion erfüllt, anderseits den unerwünschten Einblick in das Fahrzeugkofferraum verhindert.

In der Patentschrift EP 0556100B1 ist ein Ablagefach beschrieben, das an der Unterseite der Kofferraumabdeckung angeordnet ist. An der Abdeckung ist eine Führung befestigt, in der ein Rahmen eingeschoben ist, der den oberen Teil des Faches bildet. Soll aus dem Fach irgendwelcher Gegenstand entnommen werden, wird dieser herausgezogen und nachfolgend in die Ausgangsstellung eingeschoben. Beim Bedarf kann das ganze Fach herausgenommen werden.

In der Patentschrift DE 102007045037 ist ein Ablagefach mit einem Mechanismus beschrieben, der die Einstellung des gewünschten Volumens des Faches ermöglicht, wobei der Fach im Kofferraum in einer Führung, die als Schienenführung ausgeführt werden kann, verschiebbar angeordnet ist.

In der Offenlegungsschrift DE 10 2007 036 926 A1 ist eine Hutablage für ein Kraftfahrzeug beschrieben. An der Hutablage ist an der Unterseite eine Ablageeinrichtung angeordnet, die von der Oberseite der Hutablage zugänglich ist. Die Hutablage ist mit einer Führungseinrichtung versehen, so dass die Ablageeinrichtung von der Hutablage gelöst werden kann, ohne dass die Hutablage entnommen werden muss.

Der Nachteil der angeführten Lösungen liegt in der Tatsache, dass beim Herausziehen oder Einschieben des Ablagefaches, insbesondere wenn es außerhalb der Mitte ergriffen wird, dieses sich oft verklemmt und nachfolgend sein Vorschub blockiert wird. Ähnliches Problem kann auch beim völligen Herausziehen des Faches aus dem Kofferraum und bei seiner Wiedereinsetzung entstehen. Zum Verklemmen kommt es wegen des aus der Fahrzeuggeometrie sich ergebenden großen Missverhältnisses zwischen der Breite und der Länge das Faches. Derzeit verwendete Lösungen mindern, jedoch beseitigen nicht vollständig dieses Problem durch die Robustheit der Schiebemechanismen, eventuell wird die Breite des Faches verringert, wodurch aber auch das nutzbare Volumen des Faches reduziert und sein Nutzwert verringert wird.

Nachteilig ist auch die Tatsache, dass wegen der fehlenden Sicherung des Faches gegen die Verschiebung während der Fahrt des Kraftfahrzeuges infolge der Trägheitskräfte bei Beschleunigung oder Verzögerung des Fahrzeuges zur ungewollten Bewegung des Faches kommen kann.

### Darstellung der Erfindung

Die Aufgabe wird durch ein verschiebbares Ablagefach im Kofferraum gelöst, wobei der Kofferraum durch Seitenverkleidungen, Rücksitzlehnen und durch eine Heckklappe begrenzt wird, mit der schwenkbar eine Hutablage gekoppelt ist, wobei die Seitenverkleidungen jeweils eine seitliche Führung aufweisen, in der ein verschiebbares Ablagefach mit rechteckigem Grundriss angeordnet ist. Die Darstellung der Erfindung liegt darin, dass die seitliche Führung entlang ihrer Länge teilweise ein Führungselement und das verschiebbare Ablagefach an seinen beiden Seiten einen Arretier-, Sperr- und Führungsmechanismus aufweist, der mit der seitlichen Führung und der schwenkbar angeordneten Hutablage mitwirkt.

Arretier-, Sperr- und Führungsmechanismus besteht aus einem Schubglied, das in einer seitlich am verschiebbaren Ablagefach ausgebildeten Höhlung angeordnet ist, die eine untere Öffnung, eine obere Öffnung und eine Sperre aufweist und in der schwenkbar ein Sicherungs- und Sperrelement angeordnet ist, wobei das Schubglied im vorderen Bereich einen Sperrfinger hat und eine vordere Öffnung, mittlere Öffnung und hintere Öffnung aufweist und die Arretier,- Sperr- und Führungsmechanismen Zahnräder umfassen, die im vorderen Abschnitt jeder Seite des verschiebbaren Ablagefaches angeordnet und mit einer Welle miteinander gekoppelt sind.

Zwischen dem Schubglied und der Sperre ist eine vordere Feder und zwischen dem Sicherungselement und dem hinteren Teil des Schubglieds eine hintere Feder angeordnet.

Die seitliche Führung besteht aus einem Einlegeabschnitt und einer Führungsnut, die ein Führungselement aufweist.

Das Führungselement der Führungsnut stellt eine Zahnstange dar, die im oberen Teil der Führungsnut angeordnet ist.

### Übersicht der Figuren der Zeichnungen

Die Erfindung wird näher anhand der Ausführungsbeispiele gemäß den beigefügten Zeichnungen erläutert, in denen zeigen die Fig. 1 eine perspektivische Ansicht des Kofferraumes ohne des verschiebbaren Ablagefaches, die Fig. 2 eine Ansicht des Kofferraumes mit eingelegtem verschiebbaren Ablagefach und die Fig. 3 eine perspektivische Ansicht des Arretier-, Sperr- und Führungsmechanismus in einem Teilschnitt.

### Ausführungsbeispiel der Erfindung

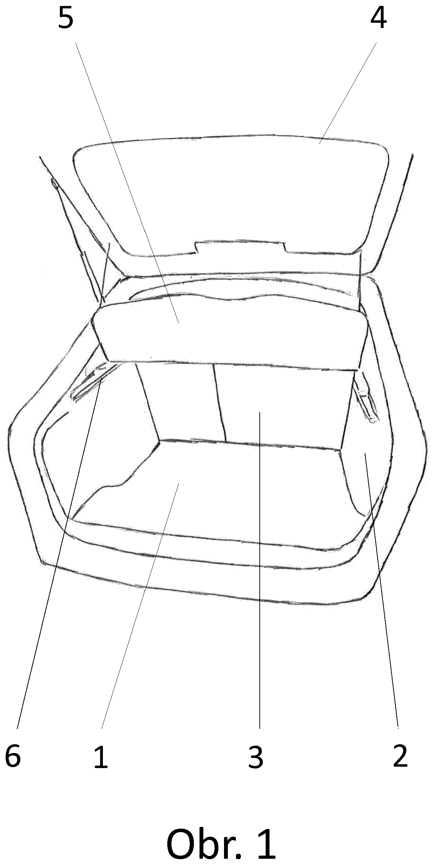

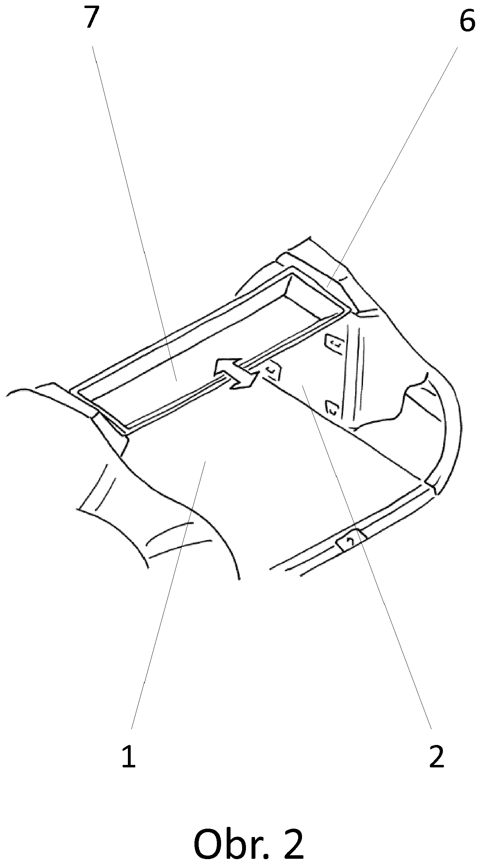

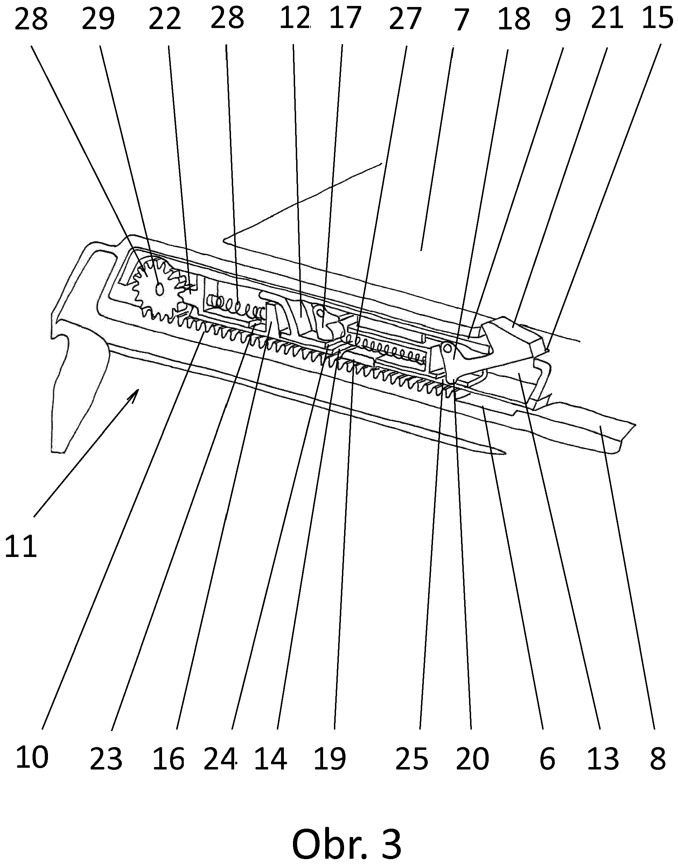

Die Fig. 1 zeigt die Ansicht eines geöffneten Kofferraumes 1 eines Kraftfahrzeuges, der seitlich durch die Seitenverkleidungen 2 des Kofferraumes 1, vorne durch Rücksitzlehnen 3 und hinten durch eine Heckklappe 4 begrenzt ist. Um den ungewollten Einblick in das Kofferraum 1 zu vermeiden, wird dieser mit schwenkbar angeordneter Hutablage 5 verdeckt, die mit der Heckklappe 4 gekoppelt ist. Die Seitenverkleidungen 2 des Kofferraumes 1 weisen eine seitliche Führung 6 auf, in der ein verschiebbares Ablagefach 7 angeordnet ist (s. Fig. 2). Die seitliche Führung 6 besteht aus einem Einlegeabschnitt 8 und einer Führungsnut 9, die an der Oberseite ein Führungselement 10, z.B. eine Zahnstange, aufweist. In einer alternativen Ausführung kann die Zahnstange an der Unterseite der Führungsnut 9 angeordnet werden, wie der Fig. 3 zu entnehmen ist.

Wie der Fig. 3 weiter zu entnehmen ist, weist das verschiebbare Ablagefach 7 mit rechteckigem Grundriss an jeder kürzeren Seite einen Arretier-, Sperr- und Führungsmechanismus 11 auf. Dieser besteht aus einem Schubglied 12, das in einer Höhlung 13 angeordnet ist, die an jeder kürzeren Seite des verschiebbaren Ablagefaches 7 ausgebildet ist und eine untere Öffnung 14, obere Öffnung 15 und eine Sperre 16 aufweist. In der Höhlung 13 sind schwenkbar ein Sicherungselement 17 und ein Sperrelement 18 angeordnet. Das Sicherungselement 17 weist ein Stützteil 19 und das Sperrelement 18 einen Verstellfinger 20 und einen Stützvorsprung 21 auf.

Das Schubglied 12 hat an der den Rücksitzlehnen 3 zugewandten Seite einen Sperrfinger 22 und weist weiter eine vordere Öffnung 23, eine mittlere Öffnung 24 und eine hintere Öffnung 25 auf. Im vorderen Bereich der Höhlung 13 ist zwischen der Sperre 16 und dem Schubglied 12 eine vordere Feder 26 angeordnet. Im hinteren Bereich der Höhlung 13 ist zwischen dem Sicherungselement 17 und dem Schubglied 12 eine hintere Feder 27 angeordnet. Im vorderen Bereich des verschiebbaren Ablagefaches 7 ist an jeder Seite ein Zahnrad 28 angeordnet. Die Zahnräder sind über einer Welle 29 miteinander gekoppelt.

Das verschiebbare Ablagefach 7 kann drei Grenzstellungen einnehmen, und zwar: die vordere Stellung, wenn es in der Führungsnut 9 liegt, die hintere Stellung, wenn es in dem Einlegeabschnitt 8 ist und die Stellung außerhalb der seitlichen Führung 6 bzw. außerhalb des Kofferraumes 1.

Wie oben angeführt, kann das verschiebbare Ablagefach 7 drei Grenzstellungen einnehmen und denen entsprechen auch die einzelnen Funktionsstellungen der Bauteile des Arretier-, Sperr- und Führungsmechanismus 11.

Ist das verschiebbare Ablagefach 7 aus dem Kofferraum 1 herausgenommen, wirkt die Kraft der vorderen Feder 26 auf das Schubglied 12 ein und diese wird in der Fahrtrichtung des Fahrzeuges weggedrückt. Der Sperrfinger 22 ist in dem Zahnrad 28 eingeschoben, wodurch seine Drehung blockiert wird. Durch die Einwirkung der hinteren Feder 27 ist das Sicherungselement 17 außerhalb der mittleren Öffnung 24 herausgeschoben.

Nach dem Einlegen des verschiebbaren Ablagefaches 7 in die seitliche Führung 6 befindet sich dieses in dem Einlegeabschnitt 8, wo die Stellung des Faches 7 gegenüber den Führungselementen 10 eindeutig definiert ist, dennoch ist ein ordentliches Aufsetzen beider Seiten des Faches 7 auf die seitlichen Führung 6 notwendig, bevor es eingeschoben wird. Dies wird dadurch erreicht, dass nach dem Aufsetzen des Sicherungselementes 17 auf die Fläche der seitlichen Führung 6 in dem Einlegeabschnitt 8 dieses gegen die Kraft der hinteren Feder 27 verschwenkt wird, wodurch das Schubglied 12 gegen die Fahrtrichtung des Fahrzeuges verschoben und der Sperrfinger 22 aus dem Zahnrad 28 herausgeschoben wird. Damit eine einwandfreie Bewegung des verschiebbaren Ablagefaches 7 sichergestellt wird, muss dieses auf die Fläche der seitlichen Führung 6 an beiden Seiten aufsetzen, da es nach dem ordentlichen Aufsetzen und nachfolgender Entsperrung beider Zahnräder 28 weiter betätigt werden kann. Bei seinem Vorschub nach vorne oder hinten greifen die Zahnräder 28 in die Führungselemente 10 - Zahnstangen ein, wobei deren gegenseitige Kopplung mittels der Welle 29 ein ungewolltes Verklemmen des verschiebbaren Ablagefaches 7 in der seitlichen Führung 6 verhindert.

Bei der Fahrt des Kraftfahrzeuges ist erforderlich, dass das verschiebbare Ablagefach 7 gesperrt wird, damit zu seiner ungewollten Bewegung in der seitlichen Führung 6 nicht kommen kann. Dies wird dadurch erzielt, dass nach dem Schließen der Heckklappe 4 und dem Aufsetzen der Hutablage 5 auf den Stützvorsprung 21 des Sperrelementes 17 dieses verschwenkt wird und nachfolgend das Schubglied 12 über die hintere Öffnung 25 und der Verstellfinger 20 in der Fahrtrichtung des Fahrzeuges weggedrückt werden, hieraufhin schieben sich die Sperrfinger 22 wieder in die Zahnräder 28 hinein, wodurch deren Drehung gesperrt wird und das verschiebbare Ablagefach 7 gegen ungewollte Bewegung während der Fahrt des Kraftfahrzeuges gesichert ist.

### Bezugszeichenliste

- 1.: Kofferraum
- 2.: Seitenverkleidung
- 3.: Sitzlehne
- 4.: Heckklappe
- 5.: Hutablage
- 6.: seitliche Führung
- 7.: verschiebbares Ablagefach
- 8.: Einlegeabschnitt
- 9.: Führungsnut
- 10.: Führungselement
- 11.: Arretier-, Sperr- und Führungsmechanismus
- 12.: Schubglied
- 13.: Höhlung
- 14.: untere Öffnung
- 15.: obere Öffnung
- 16.: Raste
- 17.: Sicherungselement
- 18.: Sperrelement
- 19.: Stützteil
- 20.: Verstellfinger
- 21.: Stützvorsprung
- 22.: Sperrfinger
- 23.: vordere Öffnung
- 24.: mittlere Öffnung
- 25.: hintere Öffnung
- 26.: vordere Feder
- 27.: hintere Feder
- 28.: Zahnrad
- 29.: Welle

## Patentansprüche

1. Anordnung mit einem verschiebbaren Ablagefach (7) im Kofferraum (1), wobei der Kofferraum (1) durch Seitenverkleidungen (2), Rücksitzlehnen (3) und eine Heckklappe (4) begrenzt wird, mit der schwenkbar eine Hutablage (5) gekoppelt ist, wobei die seitlichen Verkleidungen (2) eine seitliche Führung (6) aufweisen, in der das verschiebbare Ablagefach (7) mit rechteckigem Grundriss angeordnet ist, **dadurch gekennzeichnet, dass** die seitliche Führung (6) entlang ihrer Länge teilweise ein Führungselement (10) und das verschiebbare Ablagefach (7) an seinen beiden Seiten einen Arretier-, Sperr- und Führungsmechanismus (11) aufweist, der mit der seitlichen Führung (6) und mit der schwenkbar angeordneten Hutablage (5) mitwirkt, wobei der Arretier-, Sperr- und Führungsmechanismus (11) aus einem Schubglied (12) besteht, das in einer seitlich am verschiebbaren Ablagefach (7) ausgebildeten Höhlung (13) angeordnet ist, die eine untere Öffnung (14), eine obere Öffnung (15) und eine Sperre (16) aufweist und in der schwenkbar ein Sicherungselement (17) und Sperrelement (18) angeordnet sind, wobei das Schubglied (12) im vorderen Bereich einen Sperrfinger (22) hat und eine vordere Öffnung (23), mittlere Öffnung (24) und hintere Öffnung (25) aufweist und Arretier,- Sperr- und Führungsmechanismus (11) Zahnräder (28) umfassen, die im vorderen Abschnitt jeder Seite des verschiebbaren Ablagefaches (7) angeordnet und mit einer Welle (29) miteinander gekoppelt sind, wobei das Sperrelement (18) einen Verstellfinger (20) und einen Stützvorsprung (21) aufweist.

2. Anordnung mit einem verschiebbaren Ablagefach (7) im Kofferraum (1) nach Anspruch 1 **dadurch gekennzeichnet, dass** zwischen dem Schubglied (12) und der Sperre (16) eine vordere Feder (26) und zwischen dem Sicherungselement (17) und dem hinteren Teil des Schubglieds (12) eine hintere Feder (27) angeordnet sind.

3. Anordnung mit einem verschiebbaren Ablagefach (7) im Kofferraum (1) nach Anspruch 1 **dadurch gekennzeichnet, dass** die seitliche Führung (6) aus einem Einlegeabschnitt (8) und einer Führungsnut (9) besteht, die ein Führungselement (10) aufweist.

4. Anordnung mit einem verschiebbaren Ablagefach (7) im Kofferraum (1) nach Anspruch 3 **dadurch gekennzeichnet, dass** das Führungselement (10) der Führungsnut (9) eine Zahnstange darstellt.

## Claims

1. An arrangement with a displaceable storage compartment (7) in the luggage compartment (1), wherein the luggage compartment (1) is limited by side panels (2), rear-seat backrests (3) and a tailgate (4), with which a rear shelf (5) is pivotably coupled, wherein the side panels (2) have a lateral guide (6), in which the displaceable storage compartment (7) with rectangular outline is arranged, **characterized in that** the lateral guide (6) along its length partially has a guide element (10) and the displaceable storage compartment (7) on its two sides has a locking-, blocking- and guide mechanism (11), which cooperates with the lateral guide (6) and with the pivotably arranged rear shelf (5), wherein the locking-, blocking- and guide mechanism (11) consists of a push member (12), which is arranged in a cavity (13) formed laterally to the displaceable storage compartment (7), which cavity has a lower opening (14), an upper opening (15) and a barrier (16) and in which a securing element (17) and a blocking element (18) are pivotably arranged, wherein the push member (12) has a blocking finger in the front region and has a front opening (23), central opening (24) and back opening (25) and the locking-, blocking- and guide mechanism (11) comprises toothed wheels (28), which are arranged in the front section of each side of the displaceable storage compartment (7) and are coupled together with a shaft (29), wherein the blocking element (18) has an adjusting finger (20) and a support projection (21).

2. An arrangement with a displaceable storage compartment (7) in the luggage compartment (1) according to Claim 1, **characterized in that** a front spring (26) is arranged between the push member (12) and the barrier (16) and a back spring (27) is arranged between the securing element (17) and the back part of the push member (12).

3. An arrangement with a displaceable storage compartment (7) in the luggage compartment (1) according to Claim 1, **characterized in that** the lateral guide (6) consists of an insert section (8) and a guide groove (9), which has a guide element (10).

4. An arrangement with a displaceable storage compartment (7) in the luggage compartment (1) according to Claim 3, **characterized in that** the guide element (10) of the guide groove (9) constitutes a toothed rack.

## Revendications

1. Agencement avec un bac de rangement (7) coulissant dans le coffre à bagages (1), le coffre à bagages (1) étant limité par des habillages latéraux (2), des dossiers de sièges arrière (3) et un hayon arrière (4) avec lequel une plage arrière (5) est couplée de façon pivotante, les habillages latéraux (2) présentant un guidage (6) latéral dans lequel est disposé le bac de rangement (7) coulissant au contour rectangulaire, **caractérisé en ce que** le guidage (6) latéral présente partiellement le long de sa longueur un élément de guidage (10), et le bac de rangement (7) coulissant présente sur ses deux côtés un mécanisme d'arrêt, de blocage et de guidage (11) qui coopère avec le guidage (6) latéral et avec la plage arrière (5) disposée de façon pivotante, le mécanisme d'arrêt, de blocage et de guidage (11) se composant d'un organe de poussée (12) qui est disposé dans une cavité (13) qui est constituée latéralement sur le bac de rangement (7) coulissant et qui présente une ouverture inférieure (14), une ouverture supérieure (15) et un dispositif de blocage (16), et dans laquelle un élément de retenue (17) et un élément de blocage (18) sont disposés de façon pivotante, l'organe de poussée (12) ayant dans la zone avant un doigt de blocage (22) et présentant une ouverture avant (23), une ouverture centrale (24) et une ouverture arrière (25), et le mécanisme d'arrêt, de blocage et de guidage (11) comprenant des roues dentées (28) qui sont disposées dans le tronçon avant de chaque côté du bac de rangement (7) coulissant et qui sont couplées les unes aux autres avec un arbre (29), l'élément de blocage (18) présentant un doigt de réglage (20) et une saillie d'appui (21).

2. Agencement avec un bac de rangement (7) coulissant dans le coffre à bagages (1) selon la revendication 1, **caractérisé en ce qu'**un ressort avant (26) est disposé entre l'organe de poussée (12) et le dispositif de blocage (16), et un ressort arrière (27) est disposé entre l'élément de retenue (17) et la partie arrière de l'organe de poussée (12).

3. Agencement avec un bac de rangement (7) coulissant dans le coffre à bagages (1) selon la revendication 1, **caractérisé en ce que** le guidage (6) latéral se compose d'un tronçon d'insertion (8) et d'une rainure de guidage (9) qui présente un élément de guidage (10).

4. Agencement avec un bac de rangement (7) coulissant dans le coffre à bagages (1) selon la revendication 3, **caractérisé en ce que** l'élément de guidage (10) de la rainure de guidage (9) constitue une crémaillère.
